# DEMANDE DE BREVET EUROPEEN

(11) **EP 3 534 332 A1**
(43) Date de publication de la demande: **04.09.2019**
(21) Numéro de dépôt: 19152242.4
(22) Date de dépôt: 17.01.2019
(51) Int. Cl.: G06T 7/62, B65G 65/00

(54) **PROCÉDÉ DE SUIVI VOLUMÉTRIQUE DE PALETTES CHARGÉES D'ARTICLES EMPILÉS DANS UN CONTENEUR ET SYSTÈME DE DÉTECTION POUR SA MISE EN OEUVRE**

(30) Priorité: 28.02.2018 FR 1851757
(71) Demandeur: FM Logistic Corporate, 57370 Phalsbourg (FR)
(72) Inventeur: BELLART, Patrick, 05-825 GRODZISK MAZOWIECKI (PL); SUSSET, Arnaud, 94100 SAINT MAUR DES FOSSES (FR)
(74) Mandataire: Ipside

(57) **Abrégé**

L'invention concerne un procédé de suivi du volume de fret dans un conteneur contenant un volume Fₜₒₜₐₗ de fret, qui comporte :
- une étape d'activation d'une caméra 3D au passage d'une palette,
- une étape d'acquisition d'images au moyen de la caméra 3D,
- une étape de détermination du sens de passage de la palette, entrant dans le conteneur ou sortant du conteneur, par traitement d'image,
- une étape de détermination d'au moins une dimension de la palette, par traitement d'image,
- une étape de calcul du volume Pi de la palette,
- une étape de mise à jour du volume de fret Fₜₒₜₐₗ,
- une étape d'enregistrement dans une base de données d'au moins l'une des données suivantes : le sens de passage de la palette, le volume de fret Fₜₒₜₐₗ et le volume Pᵢ de la palette.

L'invention concerne également un système de détection pour la mise en oeuvre du procédé.

## Description

### DOMAINE TECHNIQUE DE L'INVENTION

L'invention concerne un procédé et un système de management de palettes dans une zone prédéfinie. L'invention vise plus particulièrement à offrir un procédé amélioré de suivi et de gestion de la charge volumétrique d'une remorque, d'un camion ou d'un container ainsi que du contrôle des mouvements entrants et sortants de palettes.

### ÉTAT DE LA TECHNIQUE

La connaissance de l'information relative à la quantité de marchandise, ou fret, contenu dans un conteneur ou une remorque est une information utile pour optimiser les flux de fret au sein d'un système de distribution logistique. Cette information est utile à chaque opération de chargement et déchargement et sur le long terme pour optimiser les taux de remplissage.

Il est connu de faire réaliser des inventaires et rapports par les opérateurs manutentionnaires, cette méthode en plus d'être fastidieuse ne permet pas un suivi en temps réel des taux de remplissages.

L'art antérieur connait la demande de brevet américain US2014372183 qui a pour objet la détection d'incidents de chargement liés à une qualité d'empilement de paquets pendant le chargement d'une remorque notamment au moyen d'une caméra vidéo. Les incidents de chargement sont identifiés par capture vidéo puis ensuite marqués, comptabilisés et affichés sur une interface graphique à l'adresse d'un opérateur susceptible de corriger ces incidents. Cette solution ne permet pas d'avoir un état de la charge de fret contenu dans la remorque ni un état de l'espace disponible.

L'art antérieur connait la demande de brevet américain US2004069850 qui met en oeuvre des étiquettes d'identification par radio-fréquence (ou RFID, abrévié de l'anglais « *radio frequency* identification ») qui permettent l'établissement de l'inventaire des unités de cargaison se trouvant alors dans un espace de chargement. Ce procédé assure un suivi du fret contenu dans une remorque mais il suppose la pose d'étiquette RFID sur chacune des unités de cargaison.

Aucunes des solutions actuelles ne permettent de répondre à tous les besoins requis, à savoir de fournir un suivi en temps réel du volume de fret contenu dans un conteneur, sans pour autant nécessiter une connaissance préalable de chaque unité de cargaison et un étiquetage systématique de chaque unité de cargaison.

### OBJET DE L'INVENTION

La présente invention a pour objectif de répondre au moins en partie aux limitations de l'art antérieur précédemment évoqué. Un but principal de l'invention est d'offrir un procédé perfectionné de suivi du remplissage volumétrique d'un conteneur ou de la cargaison d'une remorque.

Ainsi, selon un premier aspect, l'invention concerne un procédé d'acquisition de données volumétriques au moment du passage des palettes entrantes ou sortantes d'un conteneur.

On entend ici par conteneur un espace cloisonné ayant pour fonction logistique de contenir des marchandises pour leur transport. Il peut par exemple s'agir de l'espace de stockage de fret d'une semi-remorque, d'un camion remorque pour le transport routier, ou d'un conteneur (plus communément appelé container) utilisé dans le transport maritime ou porté par un camion du type porte-conteneur ou encore par un train.

Le procédé objet de l'invention se distingue notamment des procédés mis en oeuvre actuellement en ce que le taux d'occupation volumétrique est calculé. A l'inverse des procédés existants qui se limitent à calculer le taux d'occupation au sol.

A titre d'exemple, un camion d'une capacité de trente-trois palettes au sol et de hauteur utile de chargement de 2,6 mètres est actuellement considéré à tort comme étant plein si il est chargé de trente-trois palettes d'un mètre de haut alors qu'en réalité son taux d'occupation volumétrique est de l'ordre de trente-huit pourcents. Ce transport n'est alors pas optimisé.

L'information relative au taux d'occupation volumétrique est ainsi déterminante en vue de l'optimisation du transport de fret pour des raison économique de réductions des coût de transport logistique et pour des raisons environnementale de réductions de la pollution associée à l'utilisation de carburant fossiles.

Pour ce faire, le procédé de suivi du volume de fret dans un conteneur contenant un volume Fₜₒₜₐₗ, objet de l'invention, comporte :
- une étape d'activation d'une d'une caméra 3D au passage d'une palette,
- une étape d'acquisition d'image au moyen du de la caméra 3D,
- une étape de détermination du sens de passage de la palette, entrant dans le conteneur ou sortant du conteneur, par traitement d'image,
- une étape de détermination d'au moins une dimension de la palette, par traitement d'image,
- une étape de calcul du volume Pᵢ de la palette,
- une étape de mise à jour du volume de fret Fₜₒₜₐₗ,
- une étape d'enregistrement dans une base de données d'au moins l'une des données suivantes : le sens de passage de la palette, le volume de fret Fₜₒₜₐₗ et le volume Pᵢ de la palette.

On entend ici par palette une unité de fret ou unité de chargement, c'est-à-dire tout type d'élément empaqueté en vue de son transport. Usuellement ces unités de fret ou unité de chargement se présentent sous la forme de palette en bois ou en matières plastiques de dimension standard. On utilise le terme palette indifféremment pour désigner la palette elle-même ou la palette et les denrées empilées qu'elle porte.

Grâce à ces dispositions, un suivi en temps réel des palettes entrantes et sortantes peut être assuré. Le nombre de palettes chargées et déchargées peut ainsi être compté et le volume occupé dans une remorque peut ainsi être déterminé.

Dans des modes de réalisation, le procédé objet de l'invention comporte en outre :
- une étape de transmission de la donnée mesurée relative au volume de fret Fₜₒₜₐₗ à un gestionnaire de transport,
- une étape planification des prochaines étapes de transport et de chargements complémentaires de fret en fonction du volume résiduel disponible.

Avantageusement les données réelles collectées relatives au volume de fret Fₜₒₜₐₗ contenu dans un conteneur sont comparée aux données théoriques prévisionnelles connues, à des fins d'améliorations de la donnée théorique, notamment en vue d'affiner la facturation de la prestation de transport logistique.

Avantageusement, les données relatives au volume de fret Fₜₒₜₐₗ et au volume de chaque palette Pi mesurée par le procédé objet de l'invention pourront être agrégées sur le temps long, par ligne de fret récurrente, par secteur économique ou par secteur géographique.

L'exploitation des données agrégées permet la mise en place de processus d'amélioration continue visant à optimiser l'adéquation entre les moyens de transport mobilisés et/ou le mode de constitution des palettes afin d'améliorer le taux de remplissage volumétrique et donc la performance économique et écologique du transport des marchandises.

Dans des modes de réalisation, le procédé objet de l'invention comporte en outre :
- une étape d'activation d'un capteur d'image,
- une étape d'acquisition d'image par un capteur d'image, et
- une étape d'enregistrement de l'image capturée dans une base de données.

Grâces à ces dispositions, une image de chaque palette pourra être collectée puis centralisée et conservée. Au besoin, les images relatives à un chargement pourront être consultées pour constater si les palettes présentent des non conformités.

Dans des modes de réalisation l'activation du capteur d'image ou de la caméra 3D est déclenchée suite à la détection d'un mouvement par un capteur de mouvement.

Dans des modes de réalisation l'activation du capteur d'image ou de la caméra 3D est déclenchée suite à la détection d'un mouvement par analyse de deux images successives capturée par un capteur d'image, au moyen d'un algorithme de détection de mouvement.

Dans des modes de réalisation l'activation du capteur d'image ou de la caméra 3D est déclenchée à intervalle de temps régulier.

Dans des modes de réalisation les dimensions de la palette sont déterminées au moyen de la caméra trois dimensions (caméra 3D) aussi appelés capteurs de profondeurs par traduction de l'anglais « *depth sensor ».* On entend par caméra 3D un capteur qui produit une image dont chaque pixel correspond à une distance de l'objet observé par rapport à la caméra 3D.

Dans des modes de réalisation, la caméra 3D comporte un projecteur de lumière visible et/ou infrarouge (ou proche infrarouge), un capteur de lumière visible et/ou de rayonnement infrarouge (ou proche infrarouge) et un processeur qui interprète les images capturées pour former une image en trois dimensions.

Dans des modes de réalisation les dimensions de la palette sont déterminées par la mise en oeuvre d'une caméra trois dimensions (caméra 3D) de type profilomètres laser ou de type LIDAR.

Dans des modes de réalisation, le procédé objet de l'invention comporte en outre une étape de projection d'un motif lumineux au moyen d'un vidéo projecteur ou de projection d'un motif infrarouge au moyen d'un projecteur infrarouge.

Ces dispositions permettent la mise en oeuvre de méthodes de triangulation active basée sur la projection de lumière structurée en direction de la palette. L'observation de l'effet de déformation subi par les entités lumineuses projetées au contact de la surface de la palette permet alors de déterminer la distance au capteur d'image. Le traitement d'image mis en oeuvre durant l'une au moins des étapes de traitement d'image peut alors comporter une étape d'analyse de la déformation du motif projeté en vue de déterminer une donnée relative aux dimensions de la palette ou une donnée relative au mouvement de la palette.

Dans des modes de réalisation, la caméra 3D est une caméra fonctionnant sur le principe du temps de vol (en anglais : Time of Flight, abrévié TOF) ou une caméra fonctionnant sur le principe de triangulation.

Dans des modes de réalisation, les dimensions au sol de la palette sont connues, la dimension mesurée lors de l'étape de détermination par traitement d'image d'au moins une dimension est la hauteur de la palette et le volume Pi calculé lors de l'étape de calcul du volume Pi est calculé à partir des dimensions au sol connues de la palette et de la hauteur mesurée.

Grâce à ces dispositions, la standardisation déjà généralisée des dimensions de longueur et de largeur au sol des palettes est exploitée pour faciliter la mise en oeuvre du procédé objet de l'invention.

Quelques types de palette standard parmi les plus courantes présentent des dimensions de 800mm par 1000mm, de 1000mm par 1000mm, de 1100mm par 1100mm, de 1200 par 1200mm, mais le plus souvent de 1200mm par 800mm.

Dans des modes de réalisation, le procédé objet de l'invention comporte en outre :
- une étape de comparaison du volume mesuré Fₜₒₜₐₗ avec une donnée préenregistrée dans une base de données, une étape d'envoi d'un rapport vers un dispositif d'alarme, ledit rapport étant « conforme » si le volume mesuré Fₜₒₜₐₗ correspond à la donnée préenregistrée ou « non conforme » si la donnée mesurée ne correspond pas à la donnée préenregistrée, et
- une étape d'émission par le dispositif d'alarme d'une alarme auditive, visuelle ou silencieuse à la réception d'un rapport « non conforme ».

A titre d'exemple le procédé identifie les anomalies de chargement d'un conteneur en comparant volume de fret Fₜₒₜₐₗ mesuré dans le conteneur avec une donnée préenregistré coorespondant au volume de fret prévu après une opération de chargement ou de déchargement. Avantageusement, une ou plusieurs images capturé dans un laps de temps déterminé précédent l'émission d'un rapport « non conform » accompagne chaque émission d'un rapport « non conforme » de sorte à les faire examiner par un opérateur qui évaluera si une intervention est nécessaire.

Dans des modes de réalisation, le procédé objet de l'invention comporte en outre :
- une étape de détection de l'entrée d'un individu dans le conteneur,
- une étape d'envoi d'un rapport d'intrusion vers un dispositif d'alarme, et
- une étape d'émission par le dispositif d'alarme d'une alarme auditive, visuelle ou silencieuse à la réception d'un rapport d'intrusion.

Grâce à ces dispositions, le capteur d'image utilisé pour la mise en oeuvre du procédé objet de l'invention peut contribuer à la sécurisation de l'espace cloisonné formé par le conteneur.

Dans des modes de réalisation, le rapport « non conforme » ou le rapport d'intrusion est transmis à un terminal à distance.

Dans des modes de réalisation, le procédé objet de l'invention comporte, lors de l'envoi d'un rapport d'intrusion vers un dispositif d'alarme :
- une étape de capture d'image au moyen du capteur d'image,
- une étape d'enregistrement des images capturées dans une base de données.

Grâce à ces dispositions, le rapport d'intrusion est accompagné d'une image ou d'un extrait vidéo susceptible d'être exploité par le propriétaire du système de détection objet de l'invention, ou par les forces de police, en vue d'identifier les conditions de l'entrée non autorisée dans le conteneur.

Dans des modes de réalisation, le procédé objet de l'invention comporte en outre :
- une étape de géolocalisation du conteneur, et
- une étape d'enregistrement de la donnée de géolocalisation.

Grâce à ces dispositions, l'information de géolocalisation est enregistrée en lien avec l'information d'entrée de palette. Ces dispositions permettent un contrôle du chargement et déchargement de palette par localisation géographique.

Dans des modes de réalisation, le procédé objet de l'invention comporte en outre une étape de vérification de la présence d'une palette, ladite étape de vérification comportant les étapes suivantes :
- une étape de détermination d'une région d'intérêt correspondant à un objet,
- une étape de détermination d'au moins un point central sur l'objet identifié,
- une étape de positionnement d'une forme géométrique par rapport au point central et de détermination d'un pourcentage de la surface de la forme géométrique correspondant à des points de la région d'intérêt, et
- une étape de comparaison avec un seuil prédéterminé du pourcentage de la surface de la forme géométrique correspondant à des points de la région d'intérêt.

Grâce à ces dispositions, des anomalies de détection peuvent être évitées. Une grande variété des types d'objets entrants et sortants d'un conteneur est susceptible d'activer le système de détection. Ces objets peuvent par exemple être un chariot seul, un opérateur manutentionnaire, une petite palette, une grande palette, etc. Des anomalies peuvent également être causées par la complexité associée aux articles empilés de par leur nature (verre, métal, matériaux réfléchissants) ou de par la manière dont ils sont empilés. La mise en oeuvre d'une étape de vérification permet de se prémunir de tout ou partie des erreurs de détections.

Dans des modes de réalisation, l'étape de vérification de la présence d'une palette, comporte en outre une étape d'identification d'un objet de taille supérieure à un seuil.

Cette étape constitue un test rapide qui permet d'estimer si un objet de taille conséquente est présent dans le champ de vision de la caméra 3D et de poursuivre la vérification de la présence d'une palette dans ce cas seulement.

Dans des modes de réalisation, la forme géométrique utilisée lors de l'étape de vérification de la présence d'une palette est un ellipsoïde.

Dans des modes de réalisation, le conteneur est une remorque, une semi-remorque, ou un container pour le transport maritime ou terrestre.

Dans des modes de réalisation, le procédé objet de l'invention comporte en outre :
- une étape d'exploitation de la base de données dans le cadre de l'un au moins des processus choisis dans le groupe comprenant, la gestion des livraisons, la mutualisation du conteneur, les enquêtes de police.

Selon un deuxième aspect, l'invention concerne un système de détection pour la mise en oeuvre du procédé de gestion de palettes dans un conteneur selon l'invention, ledit système comportant au moins :
- un capteur parmi les suivants : caméra 3D, capteur optique, caméra pluridirectionnelle à balayage, ou caméra infrarouge,
- un moyen de transmission d'un signal à un serveur local ou distant
- ledit serveur local ou distant comprenant au moins une unité de traitement d'image et un support de données.

Dans des modes de réalisation, le système de détection comporte en outre un vidéoprojecteur ou un projecteur infrarouge.

Les avantages, buts et caractéristiques du système de détection objet de l'invention, étant similaires à ceux du procédé de gestion de palette objet de l'invention, ils ne sont pas rappelés ici.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 représente, sous forme de logigramme, un mode de réalisation particulier du procédé de suivi de palette objet de l'invention,
- la figure 2 représente, schématiquement et en coupe, une opération de chargement de la remorque d'un camion suivi par un procédé de gestion de palette objet de l'invention, ledit conteneur étant vide de fret au début de l'opération,
- la figure 3 représente, schématiquement et en coupe, une opération de chargement de la remorque d'un camion suivi par un procédé de suivi de palette objet de l'invention, ledit conteneur étant partiellement rempli au début de l'opération,
- la figure 4 représente, schématiquement et en coupe, une opération de déchargement de la remorque d'un camion suivi par un procédé de gestion de palette objet de l'invention,
- la figure 5 représente, schématiquement et en vue de derrière une semi-remorque dotée d'un mode de réalisation particulier d'un système de détection pour la mise en oeuvre du procédé de gestion de palettes objet de l'invention,
- la figure 6 illustre un traitement d'image mis en oeuvre lors d'une étape de vérification de la présence d'une palette au cours du procédé de gestion de palette objet de l'invention, et
- la figure 7 représente, sous forme de logigramme, les étapes de vérification de la présence d'une palette mis en oeuvre dans un mode de réalisation particulier du procédé de suivi de palette objet de l'invention.

### DESCRIPTION DÉTAILLÉE D'UN MODE DE RÉALISATION

La présente description est donnée à titre non limitatif, chaque caractéristique d'un mode de réalisation pouvant être combinée à toute autre caractéristique de tout autre mode de réalisation de manière avantageuse.

On précise dès à présent que les figures ne sont pas à l'échelle.

La mise en oeuvre du procédé 100 de suivi de palette dans un conteneur met en oeuvre un système de détection, ledit système comportant au moins :
- un capteur parmi les suivants : une caméra 3D capteur optique, caméra pluridirectionnelle à balayage, ou caméra infrarouge ou proche infrarouge,
- un moyen de transmission d'un signal à un serveur local ou distant
- ledit serveur local ou distant comprenant au moins une unité de traitement d'image et un support de données.

Dans des modes de réalisation, le système de détection comporte en outre un vidéoprojecteur ou un projecteur infrarouge.

Dans des modes de réalisation, le système de détection comporte en outre une balise GPS (Géo-positionnement par satellite, abrévié de l'anglais *Global Positioning System).*

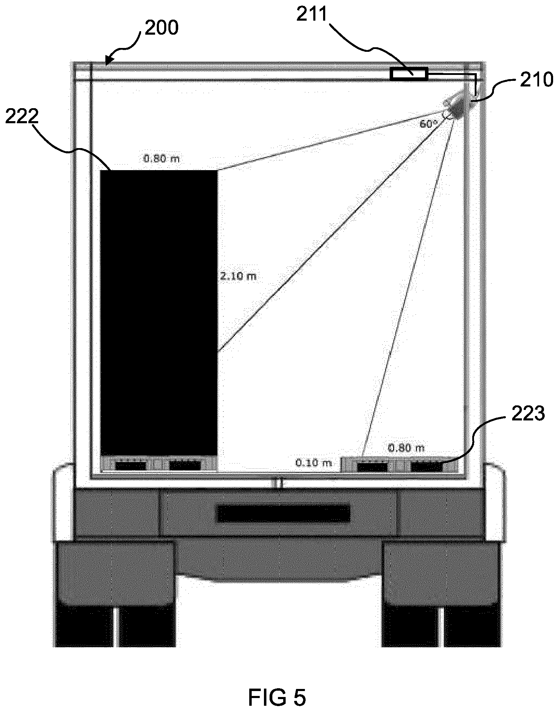

On observe en **figure 5** un exemple particulier de réalisation du système de détection objet de l'invention comporte un capteur d'image 210, fixé sur le plafond, au niveau de l'embrasure de la porte d'accès arrière d'une remorque 200 utilisée pour le transport de marchandises. Le conteneur au sens de l'invention étant formé par les parois de la remorque. Deux palettes 222 et 223 sont positionnées dans le conteneur.

Le support 210 comporte une caméra 3D, aussi appelé capteur de profondeur et un capteur d'image. Le support 210 est fixé sur le coin supérieur droit du cadre formé par l'embrasure de la porte arrière de la remorque 200 et inclinée selon un angle de 45 degrés. Le champ de vision de la caméra 3D et du capteur d'image 210 au minimum de 60 degrés est configuré pour permette la détection et la mesure du volume de palettes de hauteur comprise entre 10 centimètres et 210 centimètres. On comprend aisément qu'il est possible d'adapter l'angle en fonction des dimensions des palettes à mesurer, du positionnement de la caméra et des dimensions du conteneur.

Le positionnement et l'orientation du support 210 abritant la caméra 3D et le capteur d'image dans l'embrasure de la porte permet est configuré pour permettre la détection de toutes les palettes entrantes et sortante de la remorque 200.

Le système de détection comporte un boitier 211 fixé sur l'intérieur du conteneur. Le boitier 211 comporte une unité de traitement d'image, une balise GPS et un moyen de transmission à un serveur distant.

Le système de détection comporte en outre un capteur de mouvement (non représenté).

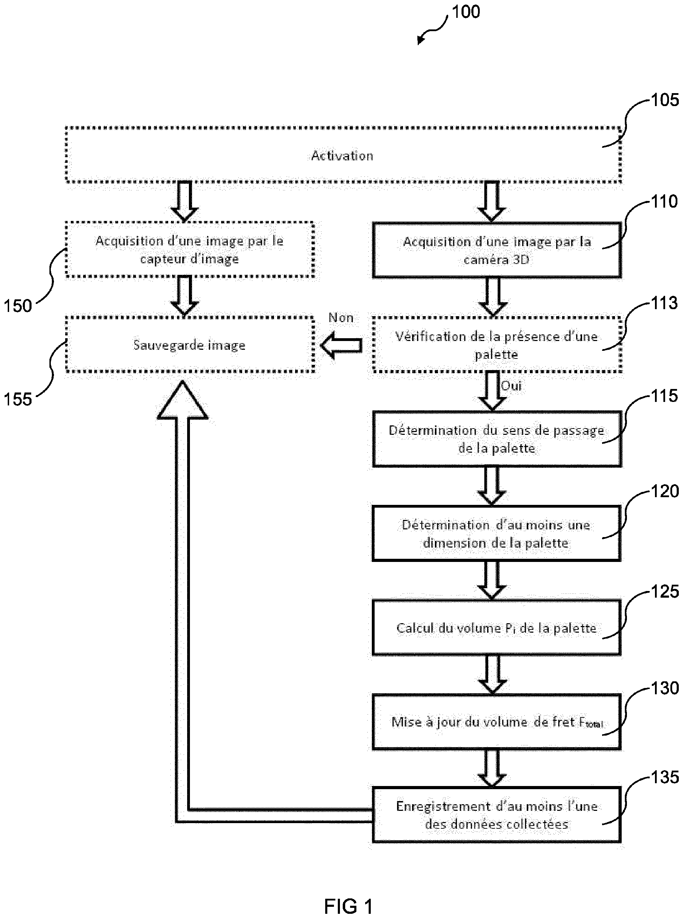

On observe en **figure** 1, un mode de réalisation particulier d'un procédé de suivi du volume de fret dans un conteneur contenant un volume Fₜₒₜₐₗ de fret, qui comporte :
- une étape 105 d'activation d'une caméra 3D au passage d'une palette,
- une étape 110 d'acquisition d'image au moyen de la caméra 3D,
- une étape 115 de détermination du sens de passage de la palette, entrant dans le conteneur ou sortant du conteneur, par traitement d'image,
- une étape 120 de détermination d'au moins une dimension de la palette, par traitement d'image,
- une étape 125 de calcul du volume Pᵢ de la palette,
- une étape 130 de mise à jour du volume de fret Fₜₒₜₐₗ,
- une étape 135 d'enregistrement dans une base de données d'au moins l'une des données suivantes : le sens de passage de la palette, le volume de fret Fₜₒₜₐₗ et le volume Fᵢ de la palette.

Lors étape 105 d'activation d'une caméra 3D au passage d'une palette, la caméra 3D est déclenchée suite à la réception d'un signal.

Dans des modes de réalisation, le signal qui permet le déclenchement de la caméra 3D est un signal envoyé par un capteur de mouvement suite à la détection d'un déplacement.

Dans des modes de réalisation, le signal qui permet le déclenchement de la caméra 3D est un signal envoyé par un capteur d'état ouvert ou fermé d'une porte, par exemple une porte de quai de chargement ou une porte arrière de remorque. Dans ce cas le procédé objet de l'invention est mis en oeuvre en continu jusqu'à la détection de la fermeture de la porte.

Lors de l'étape 110 d'acquisition, au moins deux images sont capturées par un capteur d'image ou par la caméra 3D, ces images sont transmises vers un serveur local ou distant comprenant au moins une unité de traitement d'image.

Avantageusement, le procédé de suivi de palette objet de l'invention comporte en outre une étape 113 de vérification de la présence d'une palette. Lors de cette étape 113 l'unité de traitement exploite au moins une image capturée par le capteur d'image ou par la caméra 3D en vue de déterminer si une palette est en effet présente sur l'image. Cette étape a pour objet de déclencher la mise en oeuvre du procédé objet de l'invention seulement dans le cas du passage d'une palette et non lors du passage d'un autre objet. Si une palette est en effet identifiée sur l'image capturée alors les étapes suivantes 115 à 135 du procédé sont mises en oeuvre, dans le cas contraire les étapes suivantes ne sont pas mises en oeuvre.

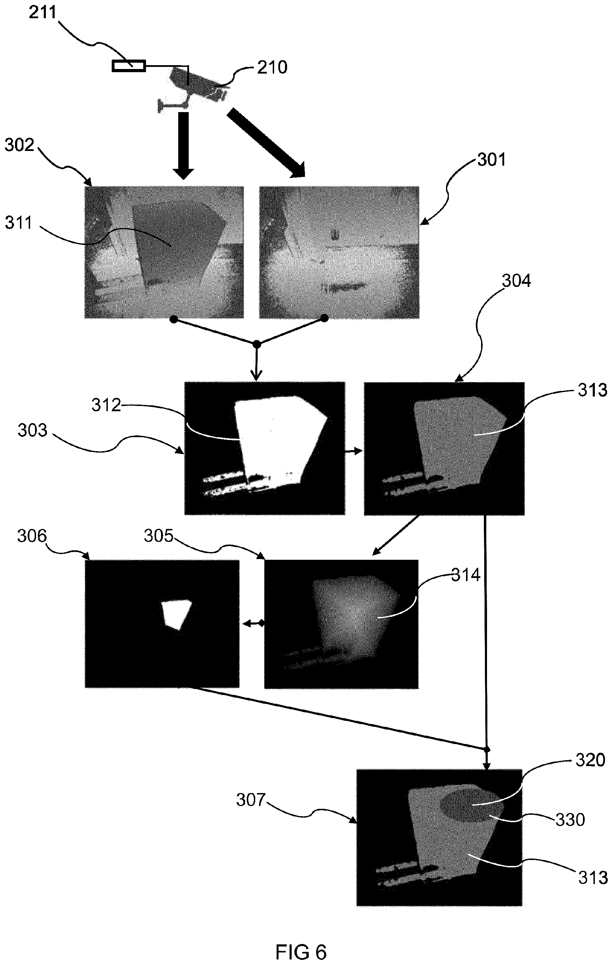

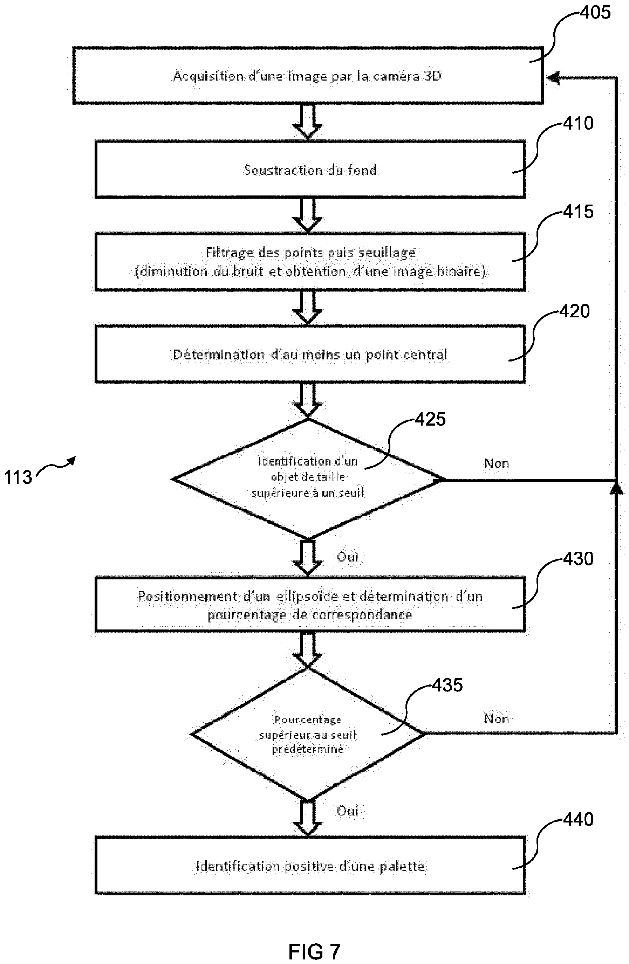

L'étape 113 de vérification de la présence d'une palette sera mieux comprise à la lecture de la description des **figures 6** **et** **7****.**

Lors de l'étape 115 de détermination par traitement d'image du sens de passage de la palette l'unité de traitement exploite au moins deux images capturées lors de l'étape 110 afin de déterminer si la palette entre dans le conteneur ou si la palette sort du conteneur.

Par exemple, l'étape 115 comporte une étape d'identification d'un nuage de point sur deux images successives capturées lors du passage de la palette. Le déplacement du nuage de point est représentatif du sens de déplacement de la palette.

Dans des modes de réalisation, aux moins deux images sont analysées par des méthodes de traitement d'image connues en vue d'identifier des points caractéristiques sur la palette. Si les points caractéristiques se déplacent vers l'intérieur du conteneur alors la palette est déterminée comme entrante, dans le cas contraire elle est déterminée comme sortante.

Lors d'une étape 120, au moins une dimension de la palette est déterminée par traitement d'image.

Dans des modes de réalisation, un motif lumineux est projeté sur la palette au moyen d'un vidéoprojecteur. L'au moins une dimension de la palette est alors déterminée par analyse de la déformation du motif projeté.

Dans des modes de réalisation, un motif infrarouge est projeté sur la palette au moyen d'un projecteur à infrarouge. L'au moins une dimension de la palette est alors déterminée par analyse de la déformation du motif projeté. Dans ce mode de réalisation le capteur d'image mis en oeuvre est doté de la capacité de détection des infrarouges.

Lors d'une étape 125, un calcul du volume Pᵢ de la palette est réalisé par l'unité de traitement informatique.

Dans le cas de figure où les dimensions au sol de la palette sont connues, seule la hauteur de la palette est mesurée par traitement d'image. Le volume Pᵢ de la palette est déterminé par calcul à partir des dimensions au sol connues de la palette et de la hauteur mesurée.

Lors d'une étape 130, une mise à jour de la valeur relative au volume de fret Fₜₒₜₐₗ contenu dans le conteneur est réalisée par l'unité de traitement informatique. Le volume de fret Fₜₒₜₐₗ par addition de Pᵢ si la palette est entrante ou soustraction de Pᵢ si la palette est sortante.

Pᵢ et Fₜₒₜ sont exprimés dans une unité de volume comme le mètre cube, par exemple.

Avantageusement, le procédé 100 selon l'une comporte une étape de géolocalisation du conteneur au moyen d'une balise GPS (Géo-positionnement par satellite, abrévié de l'anglais Global Positioning System).

Lors d'une étape 135 les données collectées lors de la mise en oeuvre du procédé objet de l'invention sont enregistrées dans une base de données.

Avantageusement, on procède à l'enregistrement d'au moins les données suivantes : le sens de passage de la palette, le volume de fret Fₜₒₜₐₗ contenu dans le conteneur et le volume Pᵢ de la palette.

Dans des modes de réalisation, le procédé 100 comporte en outre :
- une étape d'activation d'un capteur d'image
- une étape 150 d'acquisition d'image par un capteur d'image, et
- une étape 155 d'enregistrement de l'image capturée dans une base de données.

On entend par capteur d'image tout dispositif capable de capturer une image, par exemple une caméra, d'une caméra infrarouge, ou d'une caméra cumulant les deux fonctions.

Avantageusement, l'envoi d'un signal pour le déclenchement de la caméra 3D coïncide avec l'envoi d'un signal pour le déclenchement du capteur d'image.

Dans des modes de réalisation, l'image capturée par le capteur d'image est exploitée lors de l'étape 115 de détermination du sens de passage d'une palette.

Lors d'une étape 136, la donnée de géolocalisation précédemment collectée est enregistrée dans une base de données,

Dans des modes de réalisation le procédé 100 comporte en outre :
- une étape 180 d'exploitation de la base de données dans le cadre de l'un au moins des processus choisis dans le groupe comprenant, la gestion des livraisons, la mutualisation du conteneur, les enquêtes de police.

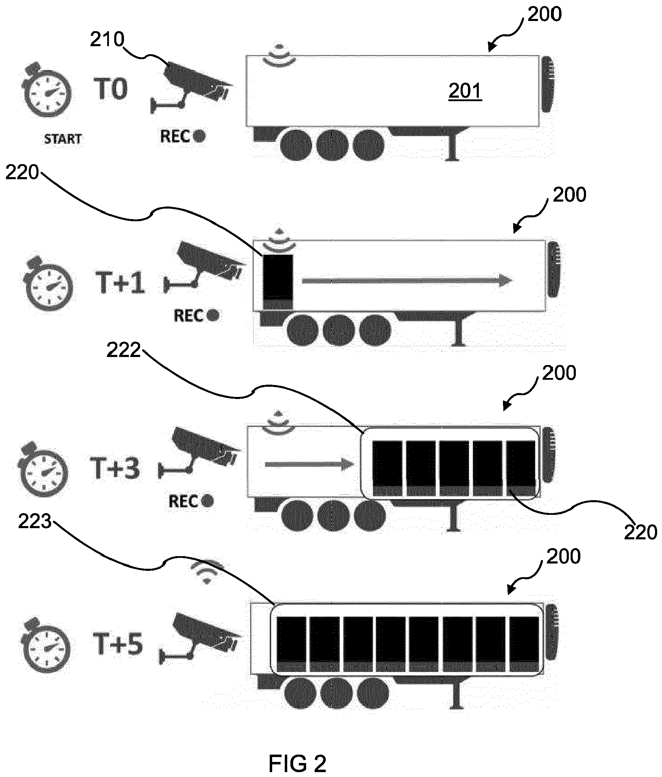

On comprendra mieux le procédé objet de l'invention au regard des **figures 2****,** **3** **et** **4** qui représentent des opérations de chargement ou de déchargement d' un conteneur 201 contenu dans une semi-remorque 200 et suivi par un procédé de gestion de palette selon l'invention.

On observe en **figure 2** une opération de chargement d'une semi-remorque 200 initialement vide au temps T0. On rappelle que l'espace dédié au transport de marchandise d'une semi-remorque est un type conteneur au sens de l'invention.

Au temps T0 la porte d'accès à la semi-remorque est ouverte ce qui déclenche un enregistrement par le moyen de capture d'image 210. Au temps T0 la valeur Fₜₒₜ est initialement égale à zéro. Au temps T+1 une palette 220 est rentrée dans le conteneur 201. La mise en oeuvre de l'ensemble des étapes du procédé 100 de gestion des palettes permet la détermination du volume de la palette 220 et le calcul du volume de fret Ftₒₜₐₗ contenu dans le conteneur 201. Le procédé 100 de gestion des palettes est mis en oeuvre autant de fois que nécessaire au cours du remplissage du conteneur 201. Au temps T+3 illustré en **figure 2****,** quatre palettes supplémentaires ont été entrées dans le conteneur 201.

Au temps T+5 illustré en figure 2 la semi-remorque est pleine. La porte d'accès à la semi-remorque est fermée et aucun mouvement n'est plus détecté. L'enregistrement par le moyen de capture d'image 210 est interrompu.

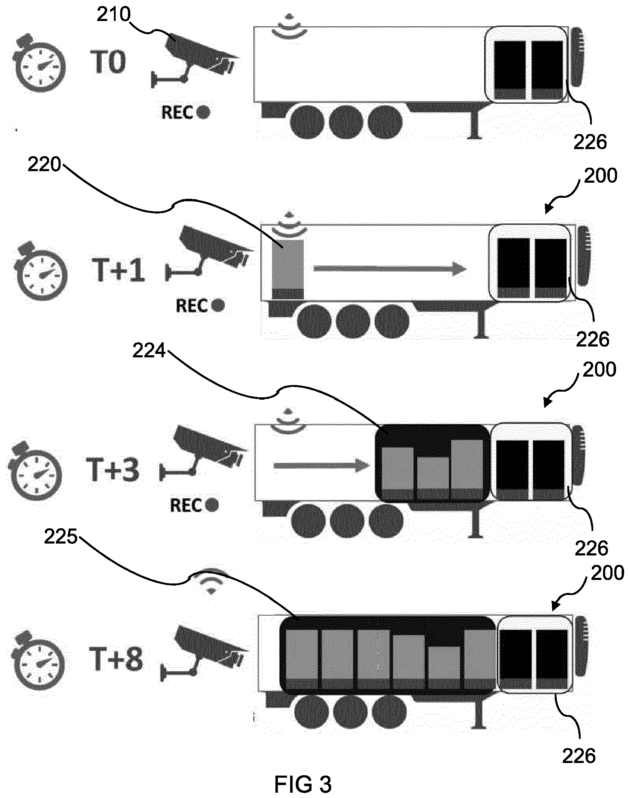

On observe en **figure 3** une opération de chargement d'une semi-remorque 200 initialement partiellement remplie au temps T0 par un volume de fret 226. Le procédé 100 de gestion des palettes est mise en oeuvre autant de fois que nécessaire au cours du remplissage du conteneur 201. Au temps T+3, trois palettes supplémentaires formant un volume 225 ont été entrées dans le conteneur 201. Au temps T+8 encore trois palettes ont été entrées dans le conteneur 201, ces trois palettes additionnelles forment avec les précédentes un volume 225. Au temps T+8 la porte d'accès à la semi-remorque est fermée et aucun mouvement n'est plus détecté. L'enregistrement par le moyen de capture d'image 210 est interrompu.

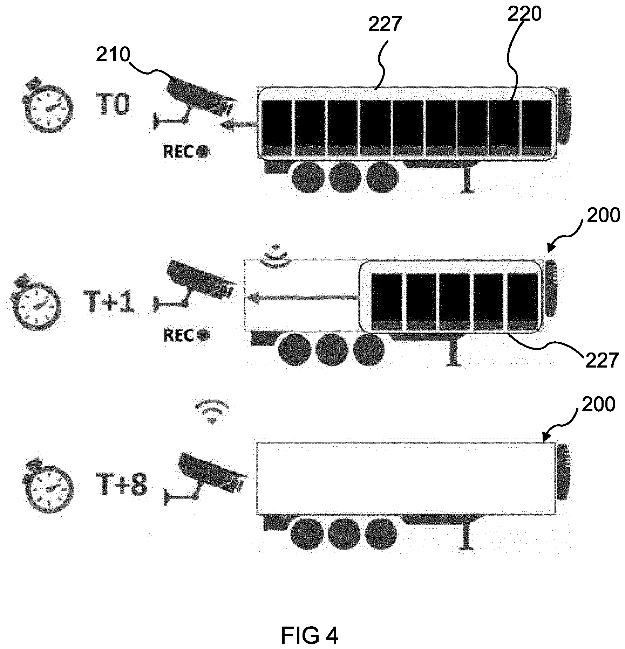

On observe en **figure 4** une opération de déchargement d'une semi-remorque 200 initialement complètement remplie au temps T0 par un volume de fret 226. Les palettes sont sorties une à une avec mise en oeuvre du procédé 100 pour la sortie de chaque palette. Au temps T+8 l'ensemble des palettes ont été sorties, la porte d'accès à la semi-remorque est fermée et aucun mouvement n'est plus détecté. L'enregistrement par le moyen de capture d'image 210 est interrompu.

On observe en **figure 6** **et** **7** les étapes d'un traitement d'image mis en oeuvre lors d'une étape 113 de vérification de la présence d'une palette au cours du procédé de gestion de palette objet de l'invention. La figure 6 illustre le traitement effectué sur l'image et la figure 7 présente, sous forme de logigramme les étapes de la vérification de la présence d'une palette.

La vérification de la présence d'une palette est mise en oeuvre au moyen d'un système de détection du type de celui présenté en **figure 5** qui comporte un support 210 comportant une caméra 3D et un boitier 211 qui comporte une unité de traitement d'image.

L'objectif de l'étape de vérification est de valider si l'objet analysé est en effet une palette dont l'entrée ou la sortie modifiera le volume de palette contenu dans le conteneur ou s'il s'agit un autre objet qu'il faudra ignorer.

Dans un exemple de réalisation la vérification de la présence d'une palette comporte:
- une étape de détermination d'une région d'intérêt correspondant à un objet,
- une étape 420 de détermination d'au moins un point central sur l'objet identifié,
- une étape 430 de positionnement d'une forme géométrique par rapport au point central et de détermination d'un pourcentage de la surface de la forme géométrique correspondant à des points de la région d'intérêt, et
- une étape 435 de comparaison avec un seuil prédéterminé du pourcentage de la surface de la forme géométrique correspondant à des points de la région d'intérêt.

Préalablement à la mise en oeuvre de l'étape de détermination d'une région d'intérêt, la caméra 3D a capturé une image 301 en l'absence de palettes dans le champ de la caméra. On distingue sur l'image 301 l'embrasure de la porte d'entrée arrière d'un camion semi-remorque sur la gauche de l'image et un espace de stockage, le conteneur, sur la droite.

L'étape de détermination d'une région d'intérêt correspondant à un objet se subdivise en une étape 405 d'acquisition d'une image par une caméra 3D, une étape 410 de soustraction du fond, et une étape 415 de filtration des points puis seuillage.

Lors d'une étape 405 d'acquisition d'une par la caméra 3D une image 302 est capturée lors du passage d'un objet 311 par le capteur d'image 210.

Lors d'une étape 410 de soustraction du fond, une comparaison des images 301 et 302 est réalisée l'unité de traitement d'image de sorte à former une nouvelle image 303. Les points qui sont similaires entre les images 301 et 302, à une tolérance près, constituent le fond, ou arrière-plan, représenté en noir sur l'image 303. Les points qui ne sont pas similaires constituent la région d'intérêt formant la représentation 312 de l'objet 311, en blanc sur l'image 303.

Lors d'une étape 415 de filtrage des points, l'image 303 est traitée et filtrée de sorte à faciliter son interprétation. Par exemple, le filtrage consiste à exclure l'ensemble des points isolés.

Le résultat de ce traitement est l'image 304 qui comporte une représentation 313 de l'objet 311, en gris foncé. Pour les étapes suivantes la représentation 313 de l'objet 311 est considérée comme la région d'intérêt.

Lors d'une étape 420 de détermination d'un point central illustré sur l'image 305, on calcule pour chaque point d'intérêt formant la région d'intérêt 313 la somme de la distance aux autres points d'intérêt illustrés en blanc. Pour chaque point, la valeur de la somme de la distance aux autres points sera d'autant plus grande que ce point est positionné vers le centre de la région d'intérêt. On désigne comme point central le point dont la valeur de la somme de la distance aux autres points est la plus grande. Les coordonnées dudit point central ainsi déterminées sont sauvegardées.

Lors d'une étape 425 d'identification d'un objet de taille supérieur à un seuil, un test préliminaire est réalisé si l'image comporte un objet de taille suffisante pour justifier une analyse plus poussée.

Dans un mode de réalisation l'étape 425 consiste en une comparaison de la valeur de la somme de la distance aux autres points d'intérêt la plus grande à une valeur seuil prédéterminée. Si aucune valeur de somme n'est supérieure au seuil prédéterminé cela signifie qu'aucun objet de grande taille n'est présent sur l'image et donc il n'y a pas de palette dans le champ de la caméra, le procédé est interrompu. Si au contraire au moins une valeur de somme est supérieure au seuil prédéterminé cela signifie qu'un objet grande taille est présent sur l'image et donc il n'y a peut y avoir une palette dans le champ de la caméra, le procédé suit son cours.

L'image 305 illustre, pour chaque point, la valeur de la somme de la distance aux autres points. Plus la valeur de ladite somme est grande plus l'intensité lumineuse est grande. L'image 305 est formée par l'ensemble des valeurs d'intensités lumineuses attribuées.

L'image 306 illustre la comparaison des sommes de la distance aux autres points avec une valeur seuil prédéterminée. Une pluralité de points présente une somme de la distance aux autres points supérieure à la valeur seuil prédéterminée.

Dans un mode de réalisation alternatif, l'étape 425 d'identification d'un objet de taille supérieur à un seuil consiste en une recherche de plans dans l'image présentant une certaine surface minimum prédéterminée.

Lors d'une étape 430 une forme géométrique est positionnée par rapport aux coordonnées du point central dont les coordonnées on été sauvegardées à l'étape 420.

Avantageusement, le centre de la forme géométrique est positionné sur un segment d'inclinaison et de longueur déterminé à l'avance et passant par le point central. La détermination de l'inclinaison et de la longueur du segment est calibrée lors de la mise en place du système de détection, il dépend notamment de l'orientation de la caméra et de sa distance au sol.

Avantageusement la forme géométrique est un ellipsoïde.

Lors de l'étape 430, l'ellipsoïde est positionné successivement sur chacun des points du segment. Pour chaque position de l'ellipsoïde, le pourcentage de la surface de la forme géométrique correspondant à des points de la région d'intérêt est calculé.

Lors d'une étape 435, les pourcentages de surface de l'ellipsoïde correspondant à des points de la région d'intérêt sont comparés avec un seuil prédéterminé.

Cette étape de test est illustrée sur l'image 307. L'ellipsoïde 330 de centre 320 est comparé à la représentation 313 de l'objet 311.

Pour chaque placement de la forme géométrique 330, le pourcentage des points de la forme géométrique qui coïncide avec un point de la représentation 313 de l'objet 311 est calculé.

Si au moins l'un des pourcentages calculés est au moins supérieur au seuil prédéterminé alors l'objet 311 est identifié comme étant une palette. Dans le cas contraire l'objet ne sera pas pris en compte dans le procédé de suivi du volume de fret objet de l'invention. Le pourcentage seuil à atteindre est fixé lors du calibrage du système de détection en tenant compte des paramètres du conteneur, des palettes et du positionnement de la caméra 3D. Dans un exemple de réalisation, ce pourcentage seuil est de 80%.

Si au moins l'un des pourcentages calculés est au moins supérieur au seuil prédéterminé alors l'objet 311 est identifié lors d'une étape 440 comme étant une palette. Le procédé 100 peut alors suivre sont cours par la mise en oeuvre des étapes 115 et suivantes.

Si au contraire aucun des pourcentages calculés est au moins supérieur au seuil prédéterminé alors l'objet 311 est identifié comme n'étant pas une palette. Le procédé 100 de suivi du volume de fret dans un conteneur contenant un volume Fₜₒₜₐₗ de fret est alors interrompu.

### DESCRIPTION DE VARIANTES DE RÉALISATION DE L'INVENTION

Dans des modes de réalisation, le procédé 100 comporte en outre :
- une étape de vérification de l'intégrité de la palette par comparaison d'une donnée mesurée avec une donnée préenregistrée dans la base de données,
- une étape d'envoi d'un rapport vers un dispositif d'alarme, ledit rapport étant « conforme » si la donnée mesurée correspond à la donnée préenregistrée ou « non conforme » si la donnée mesurée ne correspond pas à la donnée préenregistrée, et
- une étape d'émission par le dispositif d'alarme d'une alarme auditive, visuelle ou silencieuse à la réception d'un rapport « non conforme ».

Dans un exemple de réalisation, une valeur seuil de hauteur, de profondeur, de largeur ou de volume est prédéterminée pour une palette, un type de palette ou un type de semi-remorque. Cette valeur seuil peut par exemple être déterminée en fonction du type de marchandise transportée sur la palette ou en fonction de la géométrie de l'espace de stockage de la semi-remorque. Lors de la mise en oeuvre du procédé la valeur mesurée relative à une dimension de la palette est comparée à la valeur seuil prédéterminé. Une alerte est émise dans le cas où une valeur mesurée dépasse une valeur seuil prédéterminée.

Dans des modes de réalisation, le procédé 100 comporte en outre :
- une étape de détection de l'entrée non autorisée d'un individu dans le conteneur,
- une étape d'envoi d'un rapport d'intrusion vers un dispositif d'alarme, et
- une étape d'émission par le dispositif d'alarme d'une alarme auditive, visuelle ou silencieuse à la réception d'un rapport d'intrusion.

Dans des modes de réalisation, le rapport « non conforme » ou le rapport d'intrusion est transmis à un terminal à distance.

Dans des modes de réalisation, lors de l'envoi d'un rapport vers un dispositif d'alarme le procédé 100 comporte :
- une étape de capture d'image au moyen du capteur d'image,
- une étape d'enregistrement des images capturée dans une base de données.

## Revendications

1. Procédé (100) de suivi du volume de fret dans un conteneur contenant un volume Fₜₒₜₐₗ de fret, **caractérisé en ce qu'**il comporte :
- une étape (105) d'activation d'une caméra 3D au passage d'une palette,
- une étape (110) d'acquisition d'images au moyen de la caméra 3D,
- une étape (115) de détermination du sens de passage de la palette, entrant dans le conteneur ou sortant du conteneur, par traitement d'image,
- une étape (120) de détermination d'au moins une dimension de la palette, par traitement d'image,
- une étape (125) de calcul du volume Pᵢ de la palette,
- une étape (130) de mise à jour du volume de fret Fₜₒₜₐₗ,
- une étape (135) d'enregistrement dans une base de données d'au moins l'une des données suivantes : le sens de passage de la palette, le volume de fret Fₜₒₜₐₗ et le volume Pᵢ de la palette.

2. Procédé (100) selon la revendication précédente, qui comporte en outre :
- une étape d'activation d'un capteur d'image
- une étape d'acquisition d'image par un capteur d'image, et
- une étape d'enregistrement de l'image capturée dans une base de données.

3. Procédé (100) selon la revendication précédente, qui comporte en outre une étape (107) de projection d'un motif lumineux au moyen d'un vidéo-projecteur ou de projection d'un motif infrarouge au moyen d'un projecteur infrarouge.

4. Procédé (100) selon l'une quelconque des revendications précédentes, dans lequel les dimensions au sol de la palette sont connues, dans lequel la dimension mesurée lors de l'étape (120) de détermination par traitement d'image d'au moins une dimension est la hauteur de la palette et dans lequel le volume Pᵢ calculé lors de l'étape (125) de calcul du volume Pᵢ est calculé à partir des dimensions au sol connues de la palette et de la hauteur mesurée.

5. Procédé (100) selon l'une quelconque des revendications précédentes, qui comporte en outre :
- une étape (140) de comparaison du volume mesuré Fₜₒₜₐₗ avec une donnée préenregistrée dans une base de données une étape (145) d'envoi d'un rapport vers un dispositif d'alarme, ledit rapport étant « conforme » si le volume mesuré Fₜₒₜₐₗ correspond à la donnée préenregistrée ou « non conforme » si la donnée mesurée ne correspond pas à la donnée préenregistrée, et
- une étape d'émission par le dispositif d'alarme d'une alarme auditive, visuelle ou silencieuse à la réception d'un rapport « non conforme ».

6. Procédé (100) selon l'une quelconque des revendications précédentes, qui comporte en outre :
- une étape de détection de l'entrée d'un individu dans le conteneur,
- une étape d'envoi d'un rapport d'intrusion vers un dispositif d'alarme, et
- une étape d'émission par le dispositif d'alarme d'une alarme auditive, visuelle ou silencieuse à la réception d'un rapport d'intrusion.

7. Procédé (100) selon la revendication 5, dans lequel le rapport « non conforme » ou le rapport d'intrusion est transmis à un terminal à distance.

8. Procédé (100) selon la revendication 6, qui comporte, lors de l'envoi d'un rapport d'intrusion vers un dispositif d'alarme :
- une étape de capture d'image au moyen du capteur d'image,
- une étape d'enregistrement des images capturée dans une base de données.

9. Procédé (100) selon l'une quelconque des revendications précédentes qui comporte en outre :
- une étape de géolocalisation du conteneur, et
- une étape d'enregistrement de la donnée de géolocalisation.

10. Procédé (100) selon l'une quelconque des revendications précédentes, qui comporte en outre une étape (113) de vérification de la présence d'une palette, ladite étape de vérification comportant les étapes suivantes :
- une étape de détermination d'une région d'intérêt correspondant à un objet,
- une étape (420) de détermination d'au moins un point central sur l'objet identifié,
- une étape (430) de positionnement d'une forme géométrique par rapport au point central et de détermination d'un pourcentage de la surface de la forme géométrique correspondant à des points de la région d'intérêt, et
- une étape (435) de comparaison avec un seuil prédéterminé du pourcentage de la surface de la forme géométrique correspondant à des points de la région d'intérêt.

11. Procédé (100) selon la revendication précédente, dans lequel l'étape (113) de vérification de la présence d'une palette, comporte en outre :
- une étape (425) d'identification d'un objet de taille supérieure à un seuil.

12. Procédé (100) selon l'une des revendications 10 à 11, dans lequel la forme géométrique utilisée lors de l'étape (113) de vérification de la présence d'une palette est un ellipsoïde.

13. Procédé (100) selon l'une des revendications 1 à 9, qui comporte en outre :
- une étape (180) d'exploitation de la base de données dans le cadre de l'un au moins des processus choisis dans le groupe comprenant, la gestion de livraisons, la mutualisation du conteneur, les enquêtes de polices.

14. Système de détection pour la mise en oeuvre du procédé de suivi du volume de fret dans un conteneur selon l'une des revendications 1 à 13, ledit système comportant au moins :
- un capteur parmi les suivants : caméra 3D, capteur optique, caméra pluridirectionnelle à balayage, ou caméra infrarouge,
- un moyen de transmission d'un signal à un serveur local ou distant
- ledit serveur local ou distant comprenant au moins une unité de traitement d'image et un support de données.
